(19) Europäisches Patentamt
European Patent Office
Office européen des brevets

(11) **EP 3 648 436 B1**

(12) **EUROPEAN PATENT SPECIFICATION**

(45) Date of publication and mention of the grant of the patent:
**11.05.2022 Bulletin 2022/19**

(21) Application number: **18306407.0**

(22) Date of filing: **29.10.2018**

(51) International Patent Classification (IPC):
**H04L 29/08** (2006.01)    **G06F 9/50** (2006.01)

(52) Cooperative Patent Classification (CPC):
**H04L 67/2842; G06F 9/5083; H04L 67/1008; H04L 67/1012; H04L 67/289;** G06F 16/172

(54) **METHOD FOR CLUSTERING CACHE SERVERS WITHIN A MOBILE EDGE COMPUTING NETWORK**

VERFAHREN ZUM CLUSTERN VON CACHE-SERVERN IN EINEM MOBILEN EDGE-COMPUTING-NETZWERK

PROCÉDÉ PERMETTANT DE REGROUPER DES SERVEURS DE MÉMOIRE CACHE DANS UN RÉSEAU INFORMATIQUE PÉRIPHÉRIQUE MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.05.2020 Bulletin 2020/19**

(73) Proprietor: **Commissariat à l'énergie atomique et aux énergies alternatives
75015 Paris (FR)**

(72) Inventors:
• **CALVANESE STRINATI, Emilio
38054 Grenoble Cedex 09 (FR)**
• **DI PIETRO, Nicola
38054 Grenoble Cedex 09 (FR)**

(74) Representative: **Brevalex
56, Boulevard de l'Embouchure
B.P. 27519
31075 Toulouse Cedex 2 (FR)**

(56) References cited:
**US-A1- 2014 287 754**

• **LIXING CHEN ET AL: "Collaborative Service Caching for Edge Computing in Dense Small Cell Networks", ARXIV.ORG, CORNELL UNIVERSITY LIBRARY, 201 OLIN LIBRARY CORNELL UNIVERSITY ITHACA, NY 14853, 25 September 2017 (2017-09-25), XP080823403,**

**Description**

**FIELD OF THE INVENTION**

The present invention relates to the field of Mobile Edge Computing (MEC), also known as multi-access Edge Computing, in particular in small-cell networks or SSCs *(Serving Small Cells).*

**BACKGROUND OF THE INVENTION**

With the rapid progress of wireless technology and the upcoming 5G revolution, mobile devices will require extensive computing resources, ubiquitous connection availability, ultra-low latency and low power consumption. However, the development of new applications and services is limited by the finite computing power and battery life of these devices. In order to cope with these limits, data-hungry and computing-intensive tasks can be offloaded to the cloud, at the expense of latency due to the difficulty of controlling end-to-end delays in such instance. To reduce end-to-end delay and the need for extensive user-cloud communication, it has been proposed to bring cloud support the closest possible to users. This solution known as Mobile Edge Cloud (MEC) extends cloud capabilities at the network edge by providing communication, computing and caching resources there. In practice, data will be offloaded, processed and cached at MEC servers deployed at the base stations of the wireless network.

This trend in computational resource management is in fact similar to the one already witnessed in radio resource management, namely to provide more resources closer to the user. For example, in heterogeneous networks, the coexistence of small cells with macro-cells in a same geographical area leads to a two-tier structure that enables a more efficient usage of radio resources. It has been proposed to merge these two trends in a single framework referred to as femto-cloud, where the base stations or HceNBs (Home cloud enhanced Node B) not only provide short range wireless access (as HeNB in a femto-cell) but also proximity storage and computational resources.

In the following, we will more generally consider MEC networks where MEC stands for Mobile Edge Cloud or Mobile Edge Computing or Multi-access Edge Computing. Mobile Edge Computing is the process according to which User Equipments (UEs) may offload their computational tasks to other network nodes equipped with computational capacity. More specifically, Serving Small Cells of the MEC network (that could be embodied as femto-cells, pico-cells, relays, etc.), also called SSCs, are endowed with radio access technology, computing units and cache memories to serve requests of UEs and run computing tasks on their behalf. Umbrella macro-cells may coexist with SSCs in the network to provide long-range coverage.

As UEs may repetitively offload tasks to a SSC, it has been disclosed, for example in published patent application FR-A-3045859, to cache computation results in order to avoid computing again and again frequently requested tasks. Where a computation result is cached, it can be simply retrieved from the cache memory and not re-computed. The advantages of computation caching at the edge of the network are manifold: it allows for a drastic reduction of computation time and energy consumption both at the UE and the SSC side, it alleviates uplink traffic, frees network resources for other purposes, and substantially decreases the SSC workload.

Computation caching is to be carefully distinguished from conventional content caching, a topic which has been largely investigated in the context of MEC networks. Indeed, computation caching amounts to caching results of computations of instructions already executed by the SSC instead of data files merely transiting through the SSC. Hence, the amount of data stored in the cache has the same size as the size of the computation result. It is important to note that the size of the input information required to perform that computation can be much bigger (or smaller) than the size of the computation result. Whenever this result is not cached and needs to be computed, that input information has to be uploaded from the UE to the SSC, adding a non-negligible delay to the offloading procedure. The situation is very different from content caching where there is no such element as an input to a computation and the only uplink information boils down to a simple file request sent from the UE to the network.

Cache servers were initially introduced to reduce the processing load of web servers. As a cache server serves all the users connected to it, a centralized cache system may become overloaded. In order to alleviate the load of a cache server a distributed cache architecture has been envisaged, *e.g.* in the article of M. Kataoka et al. entitled "Distributed cache system for large-scale networks", published in Proc. of International Multi-Conference on Computing in the Global Information Technology, 2006, ICCGI'06, Aug. 2006, pp. 40-45. More specifically, a distributed cache system (DCS) comprises multiple cache servers, each server caching contents independently from the other servers and serving the users connected to it. A cache control server manages a list of URLs cached by the DCS, each URL of the list being associated with at least one cache server ID caching the contents of said URL. When a cache server cannot deliver the contents of an URL requested by a UE because no hit is found in its cache, the cache server forwards the request of the UE to the cache control server. If the cache control server finds that the URL is present in the above-mentioned list, the cache control server orders the associated cache server to forward the contents of the requested URL directly to the UE. In other words, the cache servers of the DSC, though caching contents independently, cooperate to reply to requests from the UEs.

In the context of a MEC network, there is also a need for a distributed cache server which can draw on cooperation between local cache servers to more efficiently handle computation requests from UEs. However, if the computations results stored in the local cache servers strongly overlap, the gain achieved by clustering the caches would be low.

A collaborative method for optimally filling caches of small cells has been disclosed in the article of L. Chen et al. entitled "Collaborative service caching for edge computing in dense small cell networks" published under arXiv.org, 25 Sept. 2017. A method for clustering computing resources at eNBs has been disclosed in patent application US-A-2014/287754.

The object of the present invention is therefore to propose a method for clustering local cache servers, where the cache memories contain results of computational tasks, which provides significant efficiency gain over isolated cache servers, when UEs offload computational tasks to the MEC network.

## BRIEF DESCRIPTION OF THE INVENTION

The present invention is defined in the appended independent claim. Various preferred embodiments are defined in the dependent claims.

## BRIEF DESCRIPTION OF THE DRAWINGS

The present invention will be better understood from the description of the following embodiments, by way of illustration and in no way limitative thereto:

Fig. 1 schematically illustrates a MEC network to which a method for clustering cache servers can be applied;
Fig. 2 schematically illustrates a method for clustering cache servers in a MEC network according to an embodiment of the invention;
Fig. 3 schematically illustrates a method for serving a request from a UE for computing a task, when the cache servers are clustered according to the method of Fig. 2.

## DETAILED DISCLOSURE OF PARTICULAR EMBODIMENTS.

We will consider in the following a MEC network, where the cells, typically SSCs, are provided with local computing and caching resources. The computing resources can be embodied by one or more computers located in the base station serving the cell or by Virtual Machines (VMs) emulated on a local server. The caching resources are typically embodied by a cache memory hosted in a local server, which can be located in the base itself or connected to it by a wired link.

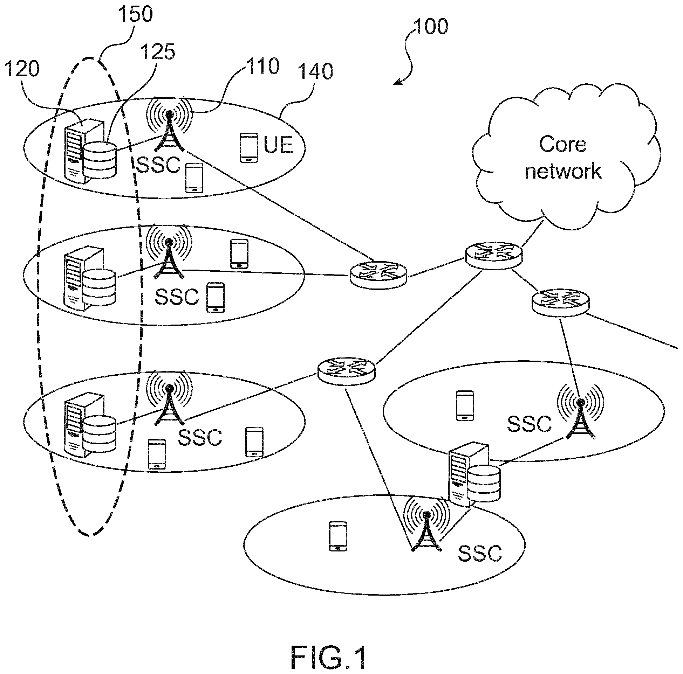

Fig. 1 represents a MEC network, 100, comprising base stations, 110, typically SSCs, each base station serving a coverage area, 140, each base station being provided with computing resources (not shown) and being connected to a cache server, 120, hosting a cache memory, 125. The base stations can be SSCs

A cache server 120 may be connected to one or several base stations. The cache servers can therefore communicate with each other via the backhaul network.

A user equipment (UE) may offload computational tasks to the MEC network by sending a request to the base station serving it. By UE, it is meant here a mobile terminal, a smartphones, a sensor, etc.

We will assume in the following that the tasks the UEs may offload to the MEC belong to a finite set of tasks, hereinafter referred to as the computation catalogue $C = \{c_1,...,c_K\}$. This computation catalogue is predetermined and can be updated in operation if necessary. A task $c_k$ is basically defined by a triplet $c_k = \left\{ W_k^{in}, e_k, W_k^{out} \right\}$ where $k$ is the label of the task, $W_k^{in}$ is the sequence of input bits, $e_k$ is the number of CPU cycles per bit needed to perform the task, and $W_k^{out}$ is the sequence of bits representing the computation result. We denote $\left| W_k^{in} \right|$ and $\left| W_k^{out} \right|$ the size in bits of $W_k^{in}$ and $W_k^{out}$ respectively.

A request to perform the task $c_k$ contains at least its label $k$, possibly the sequence of input bits $W_k^{in}$, and the maximum latency $t_k$ to perform the computation. When the SSC serving the UE receives such a request, it first urges the cache server connected to it to look up in the cache memory. If the result $W_k^{out}$ of the task in not already available in the cache memory, the SSC checks whether it can perform the requested task within the time $t_k$. If it is not the case, the request is denied. Otherwise, the task is accepted.

The goal of the present invention is to cluster the cache servers so that if the computation result $W_k^{out}$ is not found in the local cache, the search is extended to the caches of the cluster.

Such a cluster has been represented in 150. It should be noted that a cache server may belong to several clusters.

The caching policies used by the various caches can be identical or different from one cell to another. In particular, the caching policies related to caches of a given cluster may differ. They may depend upon the characteristics of the tasks that can be offloaded by the UEs and on their popularity distribution within each cell (SSC). An example of such policies has been disclosed in application EP18306036 filed by the present Applicant.

In general, each cache applies its own caching policy independently form the other caches of the cluster. Alternatively, the cache servers of a cluster may exchange information about their cache contents and cooperate in order to avoid multiple storage of the same computation result. Further and alternatively, the cache servers of a cluster, or at least some of them, may be aware of the pre-defined caching (static or dynamic) policies used by the other cache servers of the cluster.

We will assume in the following that the caches involved in the MEC have already been at least partially filled, be it after an initialization step on the basis of an estimation of the popularity distribution of the computational tasks or after the cache servers have operated for a while.

The indicator of a cache $e \in \Omega$, where $\Omega$ is the set of caches 125, is defined by the vector:

$$\sigma^e = \left\{ \sigma_1^e, \sigma_2^e, ..., \sigma_K^e \right\} \tag{1}$$

where $K = |C|$, namely the cardinal of the catalogue, $\sigma_k^e = 1$ if the result of task $c_k$ is stored in cache e and $\sigma_k^e = 0$, otherwise. Hence the cache indicator $\sigma^e$ completely characterizes the content of cache e .

Similarly, we define the cache indicator of a subset $\omega$ of $\Omega$, by:

$$\sigma^\omega = \left\{ \sigma_1^\omega, \sigma_2^\omega, ..., \sigma_K^\omega \right\} \tag{2}$$

where $\sigma_k^\omega = \bigoplus_{e \in \omega} \sigma_k^e$ , $\oplus$ standing here for the OR operation, *i.e.* if $\exists e \in \omega$ such that $\sigma_k^e = 1$ , then $\sigma_k^\omega = 1$ . In other words, if there is at least one cache belonging to the subset $\omega$, in which the result of task $c_k$ is stored, then $\sigma_k^\omega = 1$ .

Conversely, if none of them contains the result of $c_k$, then $\sigma_k^\omega = 0$ .

We also define a metric between two caches $e, f \in \Omega$ by:

$$\pi_{e,f} = \sum_{k=1}^{K} \sigma_k^f \left( 1 - \sigma_k^e \right) \rho^{e,f} \left( c_k \right) \tag{3}$$

where $\rho^{e,f}(c_k)$ is the gain (or reward) for the SSC (or the SSCs) served by the cache server hosting cache e not to compute task $c_k$ but instead to retrieve it from cache *f*. The metric value $\pi_{e,f}$ estimates therefore the overall gain for cache e to be federated with cache *f i.e.* by providing access to the computational task results which are present in cache *f* but not in cache e . More precisely, a UE which is served by the cache server hosting cache e can benefit from the access to cache *f* if the two caches are federated. It is also important to note that the metric is not symmetric (and hence is not a metric in the mathematical sense of the word), *i.e.* in general $\pi_{e,f} \neq \pi_{f,e}$ since the (computation results of the) tasks in cache e and not in cache *f* are necessarily different from the (computation results of the) tasks in cache *f* and not in cache e .

The gain for the SSC(s) served by cache e not to compute $c_k$ (but to retrieve it from cache *f*) can be expressed, for example, as:

$$\rho^{e,f}\left(c_k\right) = p^e\left(c_k\right).\left|W_k^{in}\right| \tag{4}$$

where $p^e(c_k)$ is the (possibly local) popularity of task, $c_k$, *i.e.* the probability that a request from a UE within the coverage of the SSC(s) is directed to the computation of the task $c_k$. The popularity of the tasks can be estimated locally. Alternatively, each SSC may send the local popularity vector (of dimension $K$) of the various tasks to a central controller which then computes a global popularity vector and sends it back to the SSCs. At any rate, the popularity can be estimated on a short term or a long term. They may also take into account the history of the past requests (i.e. chaining of requests) by computing conditional probabilities of requests knowing those which have already been received. Different methods for estimating the respective popularities of computational tasks have been disclosed in published application FR-A-3045859.

In expression (4), the popularity of the task is used to weigh the size of the input data, $\left|W_k^{in}\right|$, needed to compute the task in question. Additionally, the size of the input data can be weighed by an uplink communication cost and/or a computational cost. Other expressions for the gain $\rho^{e,f}(c_k)$ can alternatively be envisaged, for example the number of CPU cycles, $\theta_k^e$, needed to compute the result $W_k^{out}$.

It is noted that the second member of expression (4) does not depend upon cache $f$. However, according to a variant, the number of CPU cycles, $\theta_k^e$, may be offset by the cost of sending the computation result from the cache server hosting cache $f$ to the cache server hosting cache e , namely:

$$\rho^{e,f}\left(c_k\right) = p^e\left(c_k\right).\max\left(0,\theta_k^e - \frac{\left|W_k^{out}\right|}{\eta_{fe}}\right) \tag{5}$$

where $\eta_{fe}$ is the flowrate over the link between the cache servers $f$ and e, and where max(0, x) is the greater value of 0 and $x$. It is reminded that the two cache servers may be connected via a wired link of the backhaul network or via a wireless link. Depending upon the available flowrate between the two servers, the reward obtained by retrieving the computation result $W_k^{out}$ from cache $f$ (instead of computing it directly at the serving SSC) can be balanced by the transmission cost.

Similarly to expression (3), we can define the metric between a subset of caches $\omega \subset \Omega$ and a cache $f \notin \omega$, namely:

$$\pi_{\omega,f} = \sum_{k=1}^{K} \sigma_k^f \left(1-\sigma_k^\omega\right)\rho^{\omega,f}\left(c_k\right) \tag{6}$$

where $\rho^{\omega,f}(c_k)$ is the cumulative gain, over cluster $\omega$, achieved by having access to cache $f$, for retrieving the computation result of $c_k$ instead of computing it (whenever none of the caches $e \in \omega$ contains this result). The cumulative gain $\rho^{\omega,f}(c_k)$ can be defined in different ways, for example as the average over $\omega$:

$$\rho^{\omega,f}\left(c_k\right) = \frac{1}{\left|\omega\right|}\sum_{e\in\omega}\rho^{e,f}\left(c_k\right) \tag{7}$$

where $|\omega|$ is the cardinal of subset $\omega$. Alternatively, $\rho^{\omega,f}(c_k)$ can be defined as the maximum gain achievable by a SSC over $\omega$, namely:

$$\rho^{\omega,f}\left(c_k\right) = \max_{e\in\omega}\left(\rho^{e,f}\left(c_k\right)\right) \tag{8}$$

Other expressions of $\rho^{\omega,f}(c_k)$ can be envisaged by the man skilled in the art without departing from the scope of the present invention. For example, the cumulative gain can be defined as the minimum achievable gain over $\omega$ or by a weighted average over the gain over $\omega$, the weighting coefficients depending upon the size of the respective cells or their respective frequentation rates.

Alternatively to expression (6), the metric between a subset of caches $\omega \subset \Omega$ and a cache $f \notin \omega$ can be calculated with respect to a cache of reference e belonging to $\omega$. In such instance, the metric can be qualified as e-centric since it assesses the cumulative gain from the point of view of the cache of reference only:

$$\pi_{\omega,f} = \sum_{k=1}^{K} \sigma_k^f \left(1 - \sigma_k^\omega\right) \rho^{e,f}\left(c_k\right) \tag{9}$$

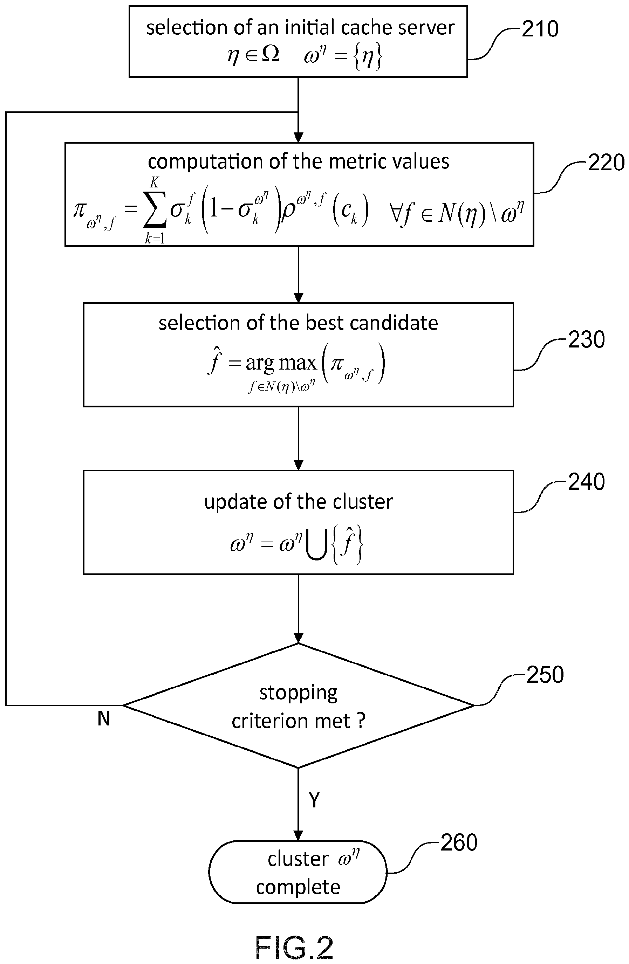

A method for clustering cache servers in a MEC network according to an embodiment of the invention has been illustrated in Fig. 2.

The method starts with an initialization step, 210, by selecting an initial cache server $\eta \in \Omega$. At this stage, the cluster, denoted here $\omega^\eta$ is simply the singleton $\{\eta\}$.

The method then enters a loop in which the neighboring cache servers of $\eta$ are checked as possible candidates for joining the cluster $\omega^\eta$.

The loop begins at step 220 by computing the metric values:

$$\pi_{\omega^\eta,f} = \sum_{k=1}^{K} \sigma_k^f \left(1 - \sigma_k^{\omega^\eta}\right) \rho^{\omega^\eta,f}\left(c_k\right), \ \forall f \in N(\eta) \backslash \omega^\eta, \tag{10}$$

where $N(\eta)$ is the set of cache servers which are neighbors of $\eta$ and $N(\eta)\backslash\omega^\eta$ is the set of cache servers belonging to $N(\eta)$ without belonging to the cluster $\omega^\eta$. A neighbor of $\eta$ is a cache server within 1-hop of $\eta$, in other words it is directly connected to $\eta$, either by a wired link of the backhaul network or by a wireless link.

According to a variant, when the cluster is built according to an $\eta$-centric approach, the metrics values are calculated according to (9), that is:

$$\pi_{\omega^\eta,f} = \sum_{k=1}^{K} \sigma_k^f \left(1 - \sigma_k^{\omega^\eta}\right) \rho^{\eta,f}\left(c_k\right), \ \forall f \in N(\eta) \backslash \omega^\eta \tag{11}$$

At step 230, the cache server, $\hat{f}$ corresponding to the highest metric value $\pi_{\omega\eta,f}$ is selected as the successful candidate, that is:

$$\hat{f} = \arg \max_{f \in N(\eta) \backslash \omega^\eta} \left(\pi_{\omega^\eta,f}\right) \tag{12}$$

At step 240, the cluster is updated by adding cache server $\hat{f}$ to $\omega^\eta$:

$$\omega^\eta = \omega^\eta \bigcup \left\{\hat{f}\right\} \tag{13}$$

At step 250, it is checked whether a stopping criterion is met. According to a first example of stopping criterion, it is checked whether the size of the cluster $\omega^\eta$ has reached a maximum size value, $|\omega^\eta|_{max}$. According to a second example of stopping criterion, it is checked whether the size of the search space, $\sum_{g \in \omega^\eta} sz(g)$, where $sz(g)$ denotes the size of the cache hosted by g, has reached a maximum size value $sz_{max}$. According to a third example of stopping criterion, it is checked whether $\pi_{\omega^\eta,\hat{f}}$ lies below a threshold value, $\pi_{\omega^\eta}^{min}$. Other examples of stopping criterion can be envisaged by the man skilled in the art without departing from the scope of the present invention e.g. the above-mentioned stopping criteria can be combined.

At any rate, if the stopping criterion is met, the clustering around cache server $\eta$ stops at 260, otherwise it goes back to step 220 for another attempt to grow the cluster.

The clustering method may then start over again with another seed, namely with another cache server $\eta' \in \Omega$ such that $\eta' \notin \omega^\eta$. When a reference cache centric approach is adopted, the clustering may start over again with another cache server which has not yet been considered as a cluster reference.

Whether the reference cache centric approach is adopted or not, if a cache $\eta'$ belongs to a cluster $\omega^\eta$, it cannot be inferred that cache $\eta$ belongs to the cluster $\omega^{\eta'}$. In other words the clusters do not enjoy symmetry properties.

By moving from one seed to the next, we progressively obtain a mapping of the cache servers of the MEC network, that is each cache server can be associated with a cluster (or even in some instances to several clusters) it belongs to. If a cache server belongs to several clusters, the search for a hit can be carried out in any of these clusters. In some cases, a cache server may remain isolated, that is the cluster is reduced to a singleton.

The method of clustering illustrated in Fig. 2 is initialized with a seed, *i.e.* it starts with one cache server, be it a cluster reference or not. However, according to a variant, the cluster $\omega^\eta$ may be initialized with a plurality of cache servers. The initial set of cache servers can be determined heuristically or by machine learning techniques.

The clustering illustrated in Fig. 2 can be performed dynamically. In such instance, the clusters may vary in time depending upon the evolution of the metric values, that is basically depending upon changes in the contents of the caches and the gain values. In order to avoid sudden changes (e.g. chattering) in the composition of the clusters, it is preferred to low-pass the gain values or to introduce a hysteresis in the composition of the clusters.

As mentioned above, the purpose of clustering the caches is to extend the search space for retrieving the computation result of a task requested by a UE, and to thereby increase the probability of getting a hit in a cache.

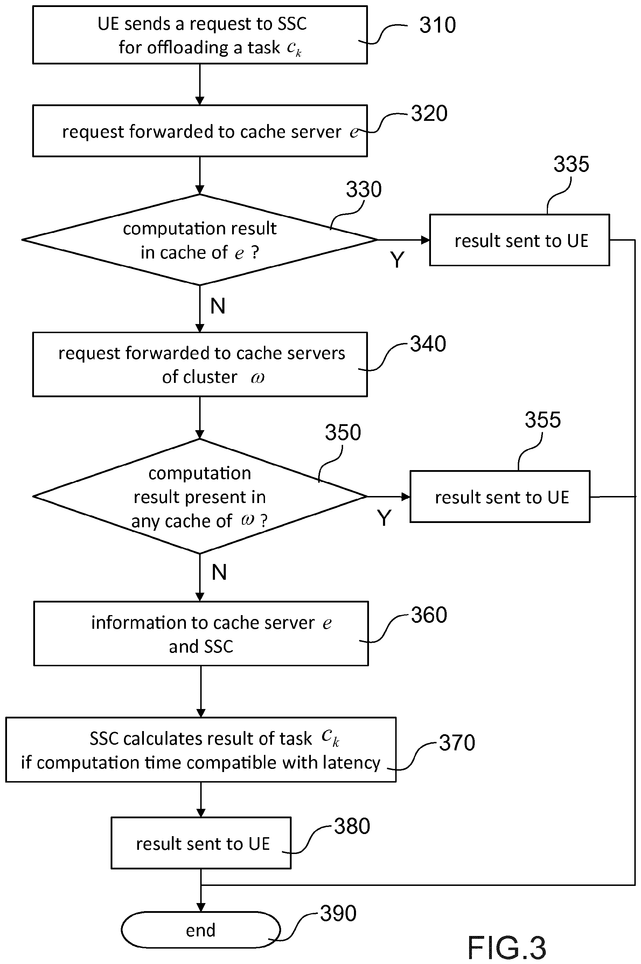

A method of serving a request from a UE, after the cache servers have been clustered, is represented in Fig. 3.

At step 310, the UE sends a request to offload a task $c_k$ to its SSC.

At step 320, the base station forwards the request to the cache server e associated with the SSC.

At step 330, if the computation result of task $c_k$ is present in the cache hosted by said cache server e, the result is sent back to the UE at 335 and the task of offloading terminates in 390.

However, if the computation result of task $c_k$ is not present in the cache, the cache server e, at step 340, forwards the UE request to the other cache servers of the same cluster $\omega$ (to which e belongs). If it belongs to several clusters, the cache server may forward the UE request at once to all the cache servers of these clusters.

If, at step 350, none of the cache servers of cluster $\omega$ registers a hit, the cache server $\eta$ is informed at step 360. At step 370, the base station calculates the result $W_k^{out}$ of task $c_k$ (if the amount of time required for computing the task is compatible with the latency required by the UE) and sends it to the UE. The task of offloading then terminates at step 390.

On the contrary, if, at step 350, one of the cache servers of cluster $\omega$ registers a hit, it sends the computation result $W_k^{out}$ to the cache server e which forwards it to the UE at step 355. The task of offloading then terminates at step 390.

The above process, in particular steps 340-350, is based on a decentralized exchange of requests and replies among the cache servers of a cluster. Alternatively, each cluster may elect a cluster controller among the cache servers. The role of the cluster controller would then be to centralize the requests if they cannot be served locally by the SSCs, to dispatch them to the members of the cluster, to collect the computation results and transmit them either to the SSCs having forwarded the requests or directly to the UEs having sent the requests in question.

**Claims**

1. Method of clustering cache servers (120) within a Mobile Edge Computing network (100), hereinafter referred to as MEC network, each cell (140) of the network being provided with local computation resources and with a cache server (120) hosting a cache (125), user equipments being able to send requests for offloading computational tasks to the cells serving them, said tasks belonging to a catalogue of possible tasks, the caches containing computation results of said tasks, said method comprising :

   (a) initializing a cluster of cache servers by selecting (210) an initial cache server ($\eta$),
   (b) computing, for each candidate cache server neighboring said initial cache server and not already belonging to said cluster, a metric value (220) between said cluster and said candidate cache server, said metric value being a sum of gains computed over the catalogue of possible tasks, a gain associated with a task being taken into account in the sum if the computation result of said task is present in the cache hosted by the candidate cache server but not present in any of the caches hosted by the cache servers belonging to said cluster;
   (c) selecting (230) the cache server of said set of cache servers achieving the highest metric value of the metric values computed at step (b);
   (d) updating (240) said cluster by including therein the cache server selected at step (c);

   wherein steps (b), (c) and (d) are repeated until a stopping criterion is met (250).

2. A method of clustering cache servers within a MEC network according to claim 1, **characterized in that** the metric value between said cluster, $\omega^\eta$, where $\eta$ is a reference cache server of $\omega^\eta$, and said candidate cache server, $f$, is calculated by

$$\pi_{\omega^\eta,f} = \sum_{k=1}^{K} \sigma_k^f \left(1 - \sigma_k^{\omega^\eta}\right) \rho^{\eta,f}(c_k)$$

, where $K$ is the number of tasks in the catalogue of possible tasks, $c_k$, $k$ = 1, ..., $K$; $\sigma_k^f = 1$ if the computation result of task $c_k$ is stored in the cache hosted by cache server $f$, and $\sigma_k^f = 0$ otherwise; $\sigma_k^{\omega^\eta} = 1$ if the computation result of task $c_k$ is stored at least in one cache hosted by a cache server of said cluster, and $\sigma_k^{\omega^\eta} = 0$, otherwise; $\rho^{\eta,f}(c_k)$ is a gain of a cell associated with reference cache server $\eta$, by retrieving the computation result of task $c_k$ from the cache hosted by cache server $f$, instead of computing it.

3. A method of clustering cache servers within a MEC network according to claim 1, **characterized in that** the metric value between said cluster, $\omega^\eta$, and said candidate cache server, $f$, is calculated by

$$\pi_{\omega^\eta,f} = \sum_{k=1}^{K} \sigma_k^f \left(1 - \sigma_k^{\omega^\eta}\right) \rho^{\omega^\eta,f}(c_k)$$

, where $K$ is the number of tasks in the catalogue of possible tasks, $c_k$, $k$ = 1, ..., $K$; $\sigma_k^f = 1$ if the computation result of task $c_k$ is stored in the cache hosted by cache server $f$, and $\sigma_k^f = 0$ otherwise; $\sigma_k^{\omega^\eta} = 1$ if the computation result of task $c_k$ is stored at least in one cache hosted by a cache server of said cluster, and $\sigma_k^{\omega^\eta} = 0$, otherwise; $\rho^{\omega^\eta,f}(c_k)$ is a cumulative gain achieved over the cluster by retrieving the computation result of task $c_k$ from the cache hosted by cache server $f$, instead of computing it.

4. A method of clustering cache servers within a MEC network according to claim 3, **characterized in that** the cumulative gain over the cluster $\omega^\eta$ is obtained as

$$\rho^{\omega^\eta,f}(c_k) = \frac{1}{|\omega^\eta|} \sum_{e \in \omega^\eta} \rho^{e,f}(c_k)$$

, where $|\omega^\eta|$ is the size of cluster $\omega^\eta$, and $\rho^{e,f}(c_k)$ is a gain of a cell associated with cache server e by retrieving the computation result of task $c_k$ from the cache hosted by cache server $f$, instead of computing it.

5. A method of clustering cache servers within a MEC network according to claim 3 **characterized in that** the cumulative gain over the cluster $\omega^e$ is obtained as

$$\rho^{\omega^\eta,f}(c_k) = \max_{e \in \omega^\eta}\left(\rho^{e,f}(c_k)\right)$$

, where $\rho^{e,f}(c_k)$ is a gain of a cell associated with cache server e by retrieving the computation result of task $c_k$ from the cache hosted by cache server $f$, instead of computing it.

6. A method of clustering cache servers within a MEC network according to claim 4 or 5, **characterized in that** the gain $\rho^{e,f}(c_k)$ is proportional to the popularity of task $c_k$ in the cell associated with cache server e and to the size of the input data for this task.

7. A method of clustering cache servers within a MEC network according to claim 4 or 5, **characterized in that** the gain $\rho^{e,f}(c_k)$ is proportional to the popularity of task $c_k$ in the cell associated with cache server $e$, and to the number of computing cycles that the cell needs to perform said task.

8. A method of clustering cache servers within a MEC network according to claim 7, **characterized in that** the number of computing cycles is offset by $\dfrac{\left|W_k^{out}\right|}{\eta_{fe}}$ where $\left|W_k^{out}\right|$ is the size of the output result of task $c_k$ and $\eta_{fe}$ is the flowrate over the link between cache servers *f* and *e* .

9. A method of clustering cache servers within a MEC network according to any of claims 6 to 8, **characterized in that** the popularities of the tasks are calculated at cell level.

10. A method of clustering cache servers within a MEC network according to any of claims 6 to 8, **characterized in that** the popularities of the tasks are calculated at the level of a centralized controller, the centralized controller receiving from the cells the local popularities of the task and averaging them over the cells.

11. A method of clustering cache servers within a MEC network according to any preceding claim, **characterized in that** the stopping criterion is a maximum size of said cluster.

12. A method of clustering cache servers within a MEC network according any of claims 1 to 10, **characterized in that** the stopping criterion is a maximum cumulative size of the caches hosted by the cache servers belonging to said cluster.

13. A method of clustering cache servers within a MEC network according to any of claims 3 to 12, **characterized in that** step (a) and repetition of steps (b),(c),(d) are carried out for a sequence of initial cache servers, where each initial cache server of said sequence is chosen such as not to belong to any of the clusters already formed from the previous initial cache servers of said sequence.

14. A method of clustering cache servers within a MEC network according to any preceding claim, **characterized in that** when a user equipment sends (310) a request for offloading a computational task to the cell serving it, the request is forwarded (320) to the cache server associated with the cell, the computation result of the task being then searched (330) in the cache hosted by this cache server, and if the computation result of the task is not present in this cache, the search is extended (350) to the caches of the other cache servers belonging to the same cluster.

15. A method of clustering cache servers within a MEC network according to any preceding claim, **characterized in that** it is performed dynamically.

**Patentansprüche**

1. Verfahren zum Clustern von Cache-Servern (120) in einem Mobile Edge Computer-Netzwerk (100), das im Folgenden als MEC-Netzwerk bezeichnet wird, wobei jede Zelle (140) des Netzwerks mit lokalen Rechenressourcen und mit einem Cache-Server (120), der einen Cache (125) hostet, versehen ist, wobei Benutzereinrichtungen in der Lage sind, Anforderungen zum Auslagern von Rechentasks an die sie bedienenden Zellen zu senden, wobei die Tasks zu einem Katalog möglicher Tasks gehören, wobei die Caches Berechnungsergebnisse der Tasks enthalten, wobei das Verfahren folgendes aufweist:

(a) Initialisierung eines Clusters von Cache-Servern durch Auswahl (210) eines Anfangs-Cache-Servers ($\eta$),
(b) Berechnen eines metrischen Wertes (220) zwischen dem Cluster und einem Kandidaten-Cache-Server für jeden Kandidaten-Cache-Server, der dem Anfangs-Cache-Server benachbart ist und nicht bereits zu dem Cluster gehört, wobei der metrische Wert eine Summe von Gewinnen ist, die über den Katalog möglicher Tasks berechnet wird, wobei ein mit einer Task verbundener Gewinn in der Summe berücksichtigt wird, wenn das Berechnungsergebnis der Task in dem Cache vorhanden ist, der von dem Kandidaten-Cache-Server gehostet wird, aber nicht in irgendeinem der Caches vorhanden ist, die von den Cache-Servern gehostet werden, die zu dem Cluster gehören;
(c) Auswählen (230) des Cache-Servers aus dem Satz von Cache-Servern, der den höchsten metrischen Wert der in Schritt (b) berechneten metrischen Werte erreicht;
(d) Aktualisieren (240) des Clusters, indem der in Schritt (c) ausgewählte Cache-Server darin aufgenommen wird;

wobei die Schritte (b), (c) und (d) wiederholt werden, bis ein Abbruchkriterium erfüllt ist (250).

2. Verfahren zum Clustern von Cache-Servern in einem MEC-Netzwerk nach Anspruch 1, **dadurch gekennzeichnet, dass** der metrische Wert zwischen dem Cluster, $\omega^\eta$, wobei $\eta$ ein Referenz-Cache-Server von $\omega^\eta$ ist, und dem

Kandidaten-Cache-Server, $f$, berechnet wird durch $\pi_{\omega^\eta, f} = \sum_{k=1}^{K} \sigma_k^f \left(1 - \sigma_k^{\omega^\eta}\right) \rho^{\eta, f}\left(c_k\right)$, wobei $K$ die Anzahl der Tasks im Katalog möglicher Tasks, $c_k$, $k = 1, ..., K$ ist; wobei $\sigma_k^f = 1$ ist, wenn das Berechnungsergebnis der Task $c_k$ in dem von dem Cache-Server $f$ gehosteten Cache gespeichert ist, und andernfalls $\sigma_k^f = 0$ ist; wobei $\sigma_k^{\omega^\eta} = 1$ ist, wenn das Berechnungsergebnis der Task $c_k$ in mindestens einem Cache gespeichert ist, der von einem Cache-Server des Clusters gehostet wird, und andernfalls $\sigma_k^{\omega^\eta} = 0$ ist; wobei $\rho^{\eta,f}(c_k)$ ein Gewinn einer dem Referenz-Cache-Server $\eta$ zugeordneten Zelle ist, der erhalten wird durch Abrufen des Berechnungsergebnisses der Task $c_k$ aus dem von dem Cache-Server $f$ gehosteten Cache, anstatt es zu berechnen.

3. Verfahren zum Clustern von Cache-Servern in einem MEC-Netz nach Anspruch 1, **dadurch gekennzeichnet, dass** der metrische Wert zwischen dem Cluster, $\omega^\eta$, und dem Kandidaten-Cache-Server, $f$, berechnet wird durch $\pi_{\omega^\eta, f} = \sum_{k=1}^{K} \sigma_k^f \left(1 - \sigma_k^{\omega^\eta}\right) \rho^{\omega^\eta, f}\left(c_k\right)$, wobei $K$ die Anzahl der Tasks im Katalog möglicher Tasks, $c_k$, $k=1,...,K$, ist; wobei $\sigma_k^f = 1$ ist, wenn das Berechnungsergebnis der Task $c_k$ im Cache gespeichert ist, der vom Cache-Server $f$ gehostet wird, und andernfalls $\sigma_k^f = 0$ ist; wobei $\sigma_k^{\omega^\eta} = 1$ ist, wenn das Berechnungsergebnis der Task $c_k$ in mindestens einem Cache gespeichert ist, der von einem Cache-Server des Clusters gehostet wird, und andernfalls $\sigma_k^{\omega^\eta} = 0$ ist; wobei $\rho^{\omega^\eta,f}(c_k)$ ein kumulativer Gewinn ist, der über den Cluster erhalten wird durch Abrufen des Berechnungsergebnisses der Task $c_k$ aus dem vom Cache-Server $f$ gehosteten Cache, anstatt es zu berechnen.

4. Verfahren zum Clustern von Cache-Servern innerhalb eines MEC-Netzwerks nach Anspruch 3, **dadurch gekennzeichnet, dass** der kumulative Gewinn über den Cluster $\omega^\eta$ erhalten wird als $\rho^{\omega^\eta, f}\left(c_k\right) = \frac{1}{|\omega^\eta|} \sum_{e \in \omega^\eta} \rho^{e,f}\left(c_k\right)$, wobei $|\omega^\eta|$ die Größe des Clusters $\omega^\eta$ ist und $\rho^{e,f}(c_k)$ ein Gewinn einer mit einem Cache-Server $e$ verbundenen Zelle ist, der erhalten wird durch Abrufen das Berechnungsergebnisses einer Task $c_k$ aus dem vom Cache-Server $f$ gehosteten Cache, anstatt es zu berechnen.

5. Verfahren zum Clustern von Cache-Servern innerhalb eines MEC-Netzwerks nach Anspruch 3, **dadurch gekennzeichnet, dass** der kumulative Gewinn über den Cluster $\omega^e$ erhalten wird als $\rho^{\omega^\eta, f}\left(c_k\right) = \max_{e \in \omega^\eta}\left(\rho^{e,f}\left(c_k\right)\right)$, wobei $\rho^{e,f}(c_k)$ ein Gewinn einer mit einem Cache-Server $e$ verbundenen Zelle ist, der erhalten wird durch Abrufen des Berechnungsergebnisses einer Task $c_k$ aus dem vom Cache-Server $f$ gehosteten Cache, anstatt es zu berechnen.

6. Verfahren zum Clustern von Cache-Servern in einem MEC-Netzwerk nach Anspruch 4 oder 5, **dadurch gekennzeichnet, dass** der Gewinn $\rho^{e,f}(c_k)$ proportional zur Häufigkeit der Task $c_k$ in der mit dem Cache-Server $e$ verbundenen Zelle und zur Größe der Eingangsdaten für diese Task ist.

7. Verfahren zum Clustern von Cache-Servern in einem MEC-Netz nach Anspruch 4 oder 5, **dadurch gekennzeichnet, dass** der Gewinn $\rho^{e,f}(c_k)$ proportional zur Häufigkeit der Task $c_k$ in der mit dem Cache-Server $e$ verbundenen Zelle und zur Anzahl der Rechenzyklen ist, die die Zelle zur Ausführung der Task benötigt.

8. Verfahren zum Clustern von Cache-Servern in einem MEC-Netz nach Anspruch 7, **dadurch gekennzeichnet, dass** die Anzahl der Rechenzyklen durch $\dfrac{\left|W_k^{out}\right|}{\eta_{fe}}$ versetzt wird, wobei $\left|W_k^{out}\right|$ die Größe des Ausgabeergebnisses der Task $c_k$ und $\eta_{fe}$ die Flussrate über die Verbindung zwischen Cache-Servern $f$ und e ist.

9. Verfahren zum Clustern von Cache-Servern in einem MEC-Netzwerk nach einem der Ansprüche 6 bis 8, **dadurch gekennzeichnet, dass** die Häufigkeiten der Tasks auf Zellebene berechnet werden.

10. Verfahren zum Clustern von Cache-Servern in einem MEC-Netz nach einem der Ansprüche 6 bis 8, **dadurch gekennzeichnet, dass** die Häufigkeiten der Tasks auf der Ebene einer zentralen Steuerung berechnet werden, wobei die zentrale Steuerung von den Zellen die lokalen Häufigkeiten der Tasks erhält und über die Zellen mittelt.

11. Verfahren zum Clustern von Cache-Servern innerhalb eines MEC-Netzwerks nach einem der vorhergehenden Ansprüche, **dadurch gekennzeichnet, dass** das Stoppkriterium eine maximale Größe des Clusters ist.

12. Verfahren zum Clustern von Cache-Servern in einem MEC-Netzwerk nach einem der Ansprüche 1 bis 10, **dadurch gekennzeichnet, dass** das Stoppkriterium eine maximale kumulative Größe der Caches ist, die von den zu dem Cluster gehörenden Cache-Servern gehostet werden.

13. Verfahren zum Clustern von Cache-Servern innerhalb eines MEC-Netzes nach einem der Ansprüche 3 bis 12, **dadurch gekennzeichnet, dass** Schritt (a) und die Wiederholung der Schritte (b), (c), (d) für eine Folge von Anfangs-Cache-Servern durchgeführt werden, wobei jeder Anfangs-Cache-Server der Folge derart gewählt wird, dass er zu keinem der Cluster gehört, die bereits aus den vorherigen Anfangs-Cache-Servern der Folge gebildet wurden.

14. Verfahren zum Clustern von Cache-Servern innerhalb eines MEC-Netzes nach einem der vorhergehenden Ansprüche, **dadurch gekennzeichnet, dass**, wenn ein Benutzergerät eine Anforderung zum Auslagern einer Rechentask an die Zelle, die es bedient, sendet (310), die Anforderung an den mit der Zelle verbundenen Cache-Server weitergeleitet wird (320), das Berechnungsergebnis der Task dann in dem von diesem Cache-Server gehosteten Cache gesucht wird (330), und wenn das Berechnungsergebnis der Task nicht in diesem Cache vorhanden ist, die Suche auf die Caches der anderen Cache-Server, die zu demselben Cluster gehören, ausgedehnt wird (350).

15. Verfahren zum Clustern von Cache-Servern in einem MEC-Netzwerk nach einem der vorhergehenden Ansprüche, **dadurch gekennzeichnet, dass** es dynamisch ausgeführt wird.

**Revendications**

1. Procédé de regroupement de serveurs de mémoire cache (120) dans un réseau informatique périphérique mobile (100), ci-après dénommé réseau MEC, chaque cellule (140) du réseau étant munie de ressources de calcul locales et d'un serveur de mémoire cache (120) hébergeant une mémoire cache (125), des équipements utilisateurs étant aptes à envoyer des demandes pour le déchargement de tâches de calcul sur les cellules les desservant, lesdites tâches appartenant à un catalogue de tâches possibles, les mémoires cache contenant des résultats de calcul desdites tâches, ledit procédé comprenant :

(a) l'initialisation d'un groupement de serveurs de mémoire cache en sélectionnant (210) un serveur de mémoire cache initial ($\eta$),
(b) le calcul, pour chaque serveur de mémoire cache candidat voisin dudit serveur de mémoire cache initial et n'appartenant pas déjà audit groupement, d'une valeur métrique (220) entre ledit groupement et ledit serveur de mémoire cache candidat, ladite valeur métrique étant une somme de gains calculés sur le catalogue de tâches possibles, un gain associé à une tâche étant pris en compte dans la somme si le résultat de calcul de ladite tâche est présent dans la mémoire cache hébergée par le serveur de mémoire cache candidat mais n'est pas présent dans aucune des mémoires cache hébergées par les serveurs de mémoire cache appartenant audit groupement ;
(c) la sélection (230) du serveur de mémoire cache dudit ensemble de serveurs de mémoire cache atteignant la valeur métrique la plus élevée parmi les valeurs métriques calculées à l'étape (b) ;
(d) la mise à jour (240) dudit groupement en incluant dans celui-ci le serveur de mémoire cache sélectionné à l'étape (c) ;

dans lequel les étapes (b), (c) et (d) sont répétées jusqu'à ce qu'un critère d'arrêt soit satisfait (250).

2. Procédé de regroupement de serveurs de mémoire cache dans un réseau MEC selon la revendication 1, **caractérisé en ce que** la valeur métrique entre ledit groupement, $\omega^\eta$, où $\eta$ est un serveur de mémoire cache de référence de $\omega^\eta$, et ledit serveur de mémoire cache candidat, $f$, est calculée par $\pi_{\omega\eta,f} = \frac{\sum_{k=1}^{K} \sigma_k^f \left(1 - \sigma_k^{\omega^\eta}\right) \rho^{\eta,f}(c_k)}{}$ , où K est le nombre de tâches dans le catalogue de tâches possibles, $c_k$, k = 1,...,K; $\sigma_k^f = 1$ si le résultat de calcul d'une tâche $c_k$ est stocké dans la mémoire cache hébergée par un serveur de mémoire cache $f$, et sinon $\sigma_k^f = 0$ ; $\sigma_k^{\omega^\eta} = 1$ si le résultat de calcul d'une tâche $c_k$ est stocké au moins dans une mémoire cache hébergée par un serveur de mémoire cache dudit groupement, et sinon $\sigma_k^{\omega^\eta} = 0$ ; $\rho^{\eta,f}(c_k)$ est un gain d'une cellule associée à un serveur de mémoire cache de référence $\eta$, en récupérant le résultat de calcul d'une tâche $c_k$ à partir de la mémoire cache hébergée par le serveur de mémoire cache $f$, au lieu de le calculer.

3. Procédé de regroupement de serveurs de mémoire cache dans un réseau MEC selon la revendication 1, **caractérisé en ce que** la valeur métrique entre ledit groupement, $\omega^\eta$, et ledit serveur de mémoire cache candidat, $f$, est calculée par $\pi_{\omega\eta,f} = \sum_{k=1}^{K} \sigma_k^f \left(1 - \sigma_k^{\omega^\eta}\right) \rho^{\omega^\eta,f}(c_k)$ , où K est le nombre de tâches dans le catalogue de tâches possibles, $c_k$, k = 1,...,K; $\sigma_k^f = 1$ si le résultat de calcul d'une tâche $c_k$ est stocké dans la mémoire cache hébergée par un serveur de mémoire cache $f$, et sinon $\sigma_k^f = 0$ ; $\sigma_k^{\omega^\eta} = 1$ si le résultat de calcul d'une tâche $c_k$ est stocké au moins dans une mémoire cache hébergée par un serveur de mémoire cache dudit groupement, et sinon $\sigma_k^{\omega^\eta} = 0$ ; $\rho^{\omega^\eta,f}(c_k)$ est un gain cumulé obtenu sur le groupement en récupérant le résultat de calcul d'une tâche $c_k$ à partir de la mémoire cache hébergée par le serveur de mémoire cache $f$, au lieu de le calculer.

4. Procédé de regroupement de serveurs de mémoire cache dans un réseau MEC selon la revendication 3, **caractérisé en ce que** le gain cumulé sur le groupement $\omega^\eta$ est obtenu comme $\rho^{\omega^\eta,f}(c_k) = \frac{1}{|\omega^\eta|} \sum_{e \in \omega^\eta} \rho^{e,f}(c_k)$ , où $|\omega^\eta|$ est la taille du groupement $\omega^\eta$, et $\rho^{e,f}(c_k)$ est un gain d'une cellule associée à un serveur de mémoire cache $e$ en récupérant le résultat de calcul d'une tâche $c_k$ à partir de la mémoire cache hébergée par le serveur de mémoire cache $f$, au lieu de le calculer.

5. Procédé de regroupement de serveurs de mémoire cache dans un réseau MEC selon la revendication 3, **caractérisé en ce que** le gain cumulé sur le groupement $\omega^\eta$ est obtenu comme $\rho^{\omega^\eta,f}(c_k) = \max_{e \in \omega^\eta}(\rho^{e,f}(c_k))$ , où $\rho^{e,f}(c_k)$ est un gain d'une cellule associée à un serveur de mémoire cache $e$ en récupérant le résultat de calcul d'une tâche $c_k$ à partir de la mémoire cache hébergée par le serveur de mémoire cache $f$, au lieu de le calculer.

6. Procédé de regroupement de serveurs de mémoire cache dans un réseau MEC selon la revendication 4 ou 5, **caractérisé en ce que** le gain $\rho^{e,f}(c_k)$ est proportionnel à la popularité d'une tâche $c_k$ dans la cellule associée à un serveur de mémoire cache $e$ et à la taille des données d'entrée pour cette tâche.

7. Procédé de regroupement de serveurs de mémoire cache dans un réseau MEC selon la revendication 4 ou 5, **caractérisé en ce que** le gain $\rho^{e,f}(c_k)$ est proportionnel à la popularité d'une tâche $c_k$ dans la cellule associée à un serveur de mémoire cache $e$ et au nombre de cycles de calcul dont la cellule a besoin pour réaliser ladite tâche.

**8.** Procédé de regroupement de serveurs de mémoire cache dans un réseau MEC selon la revendication 7, **caractérisé en ce que** le nombre de cycles de calcul est décalé de $\frac{|W_k^{out}|}{\eta_{fe}}$ , où $|W_k^{out}|$ est la taille du résultat de sortie d'une tâche $c_k$ et $\eta_{fe}$ est le débit sur la liaison entre des serveurs de mémoire cache *f* et *e*.

**9.** Procédé de regroupement de serveurs de mémoire cache dans un réseau MEC selon l'une quelconque des revendications 6 à 8, **caractérisé en ce que** les popularités des tâches sont calculées à un niveau de cellule.

**10.** Procédé de regroupement de serveurs de mémoire cache dans un réseau MEC selon l'une quelconque des revendications 6 à 8, **caractérisé en ce que** les popularités des tâches sont calculées au niveau d'un contrôleur centralisé, le contrôleur centralisé recevant, à partir des cellules, les popularités locales de la tâche et faisant leur moyenne sur les cellules.

**11.** Procédé de regroupement de serveurs de mémoire cache dans un réseau MEC selon une quelconque revendication précédente, **caractérisé en ce que** le critère d'arrêt est une taille maximale dudit groupement.

**12.** Procédé de regroupement de serveurs de mémoire cache dans un réseau MEC selon l'une quelconque des revendications 1 à 10, **caractérisé en ce que** le critère d'arrêt est une taille cumulée maximale des mémoires cache hébergées par les serveurs de mémoire cache appartenant audit groupement.

**13.** Procédé de regroupement de serveurs de mémoire cache dans un réseau MEC selon l'une quelconque des revendications 3 à 12, **caractérisé en ce que** l'étape (a) et la répétition des étapes (b), (c), (d) sont réalisées pour une séquence de serveurs de mémoire cache initiaux, où chaque serveur de mémoire cache initial de ladite séquence est choisi de manière qu'il n'appartienne à aucun des groupements déjà formés à partir des serveurs de mémoire cache initiaux précédents de ladite séquence.

**14.** Procédé de regroupement de serveurs de mémoire cache dans un réseau MEC selon une quelconque revendication précédente, **caractérisé en ce que**, quand un équipement utilisateur envoie (310) une demande de déchargement d'une tâche de calcul à la cellule le desservant, la demande est transmise (320) à un serveur de mémoire cache associé à la cellule, le résultat de calcul de la tâche étant ensuite recherché (330) dans la mémoire cache hébergée par ce serveur de mémoire cache et, si le résultat de calcul de la tâche n'est pas présent dans cette mémoire cache, la recherche est étendue (350) aux mémoires cache des autres serveurs de mémoire cache appartenant au même groupement.

**15.** Procédé de regroupement de serveurs de mémoire cache dans un réseau MEC selon une quelconque revendication précédente, **caractérisé en ce qu'**il est réalisé dynamiquement.

FIG.1

selection of an initial cache server

$$\eta \in \Omega \quad \omega^{\eta} = \{\eta\}$$

210

computation of the metric values

$$\pi_{\omega^{\eta},f} = \sum_{k=1}^{K} \sigma_k^f \left(1 - \sigma_k^{\omega^{\eta}}\right) \rho^{\omega^{\eta},f}\left(c_k\right) \quad \forall f \in N(\eta) \setminus \omega^{\eta}$$

220

selection of the best candidate

$$\hat{f} = \arg\max_{f \in N(\eta) \setminus \omega^{\eta}} \left(\pi_{\omega^{\eta},f}\right)$$

230

update of the cluster

$$\omega^{\eta} = \omega^{\eta} \bigcup \{\hat{f}\}$$

240

stopping criterion met ?

250

N

Y

cluster $\omega^{\eta}$ complete

260

FIG.2

15

UE sends a request to SSC
for offloading a task $c_k$ — 310

request forwarded to cache server $e$ — 320

computation result
in cache of $e$ ? — 330

result sent to UE — 335

Y

N

request forwarded to cache servers
of cluster $\omega$ — 340

computation
result present in
any cache of $\omega$ ? — 350

result sent to UE — 355

Y

N

information to cache server $e$
and SSC — 360

SSC calculates result of task $c_k$
if computation time compatible with latency — 370

result sent to UE — 380

end — 390

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3045859 A
- US 2014287754 A

- EP 18306036 A

**Non-patent literature cited in the description**

- Distributed cache system for large-scale networks. **M. KATAOKA et al.** Proc. of International Multi-Conference on Computing in the Global Information Technology. ICCGI, 06 August 2006, 40-45

- **L. CHEN et al.** Collaborative service caching for edge computing in dense small cell networks. *arXiv.org,* 25 September 2017